# EUROPEAN PATENT SPECIFICATION

(11) **EP 4 109 790 B1**
(45) Date of publication and mention of the grant of the patent: **31.07.2024**
(21) Application number: 21305862.1
(22) Date of filing: 23.06.2021
(51) Int. Cl.: H04J 14/02, H04B 10/075, H04B 10/27

(54) **TUNING OPTICAL TRANSCEIVERS FOR DATA RATE CAPACITY**
ABSTIMMUNG DER DATENRATENKAPAZITÄT OPTISCHER TRANSCEIVER
ÉMETTEURS-RÉCEPTEURS OPTIQUES DE RÉGLAGE POUR LA CAPACITÉ DE DÉBIT DE DONNÉES

(43) Date of publication of application: 28.12.2022
(73) Proprietor: Alcatel Submarine Networks, 91620 Nozay (FR)
(72) Inventor: TERNIER, Eric, 91620 NOZAY (FR); VANDENWEGHE, Cedric, 91620 NOZAY (FR); DUPONT, Sébatien, 91620 NOZAY (FR); PECCI, Pascal, 91620 NOZAY (FR)
(74) Representative: Loyer & Abello

(56) References cited:
- EP-A1- 3 579 459
- US-B1- 10 873 411

## Description

### TECHNICAL FIELD

Various example embodiments relate generally to optical communication systems and, more particularly but not exclusively, to tuning of optical transceivers in optical communication systems.

### BACKGROUND

In communication networks, various communications technologies may be used to support various types of communications.

US 10873411B1 discloses a method for configuring an optical link with an optimized spectral efficiency and bit rate. The optical link comprises a plurality of channels.

EP 3579459A1 discloses an optical transceiver capable of optimizing the performance of the corresponding optical channel by dynamically adjusting the optical power of the output signal in response to the FEC-performance data received from the corresponding remote transceiver.

### SUMMARY

According to the invention, an apparatus includes at least one processor and at least one memory including computer program code, wherein the at least one memory and the computer program code are configured to, with the at least one processor, cause the apparatus at least to determine, for a set of optical transceivers supporting a set of optical channels, based on a combined evaluation of a range of payload rates and a range of baud rates using forward error correction performance data associated with the set of optical channels, a set of optical parameters for the set of optical transceivers, and initiate configuration of the set of optical transceivers to support the set of optical parameters for the set of optical transceivers. The range of baud rates is defined based on a minimum baud rate value and a maximum baud rate value, the minimum baud rate value being based on a transceiver minimum baud rate, the maximum baud rate value being based on a maximum channel width of the set of optical channels and an occupancy ratio.

In at least some example embodiments, the set of optical parameters for the set of optical transceivers is configured to optimize a spectral efficiency for the set of optical channels. In at least some example embodiments, the spectral efficiency for the set of optical channels is based on a payload rate for the set of optical channels and a channel width for the set of optical channels. In at least some example embodiments, the maximum channel width is defined as a total bandwidth reserved for the set of optical channels divided by a number of optical channels in the set of optical channels. In at least some example embodiments, a set of guard bands separates adjacent pairs of optical channels in the set of optical channels, wherein the maximum channel width is defined as a usable bandwidth supported by the set of optical channels divided by a number of optical channels in the set of optical channels, wherein the usable bandwidth supported by the set of optical channels is defined as a total bandwidth supported by the set of optical channels less an amount of bandwidth used by the set of guard bands. In at least some example embodiments, at least one of the range of payload rates and the range of baud rates is reduced based on at least one of a generalized signal to noise ratio or a signal to noise ratio due to end-to-end optical transmission. In at least some example embodiments, the combined evaluation of the range of payload rates and the range of baud rates is performed by stepping through at least a portion of the range of payload rates using a plurality of payload rate steps and stepping through at least a portion of the range of baud rates using a plurality of baud rate steps. In at least some example embodiments, at least one of each of the optical channels is configured at the same payload rate at each of the plurality of payload rate steps or each of the optical channels is configured at the same baud rate at each of the plurality of baud rate steps. In at least some example embodiments, at least one stepping through at least a portion of the range of payload rates is performed at a constant baud rate or stepping through at least a portion of the range of baud rates is performed at a constant payload rate. In at least some example embodiments, the combined evaluation of the range of payload rates and the range of baud rates is performed based on a plurality of occupancy ratios. In at least some example embodiments, at least one of the baud rate steps or the payload rate steps are defined based on at least one of a fixed minimum value, a fixed value determined based on an input value supported by the optical transceivers in the set of optical transceivers, or a granularity supported by the optical transceivers in the set of optical transceivers. In at least some example embodiments, the forward error correction performance data includes, for at least one of the optical channels, a quality factor Q² defined based on a forward error correction error counter at a receiver of the respective optical transceiver associated with the respective optical channel. In at least some example embodiments, for at least one of the optical channels, the forward error correction performance data is received in a dedicated field in an overhead of a data frame received by a local optical transceiver of the respective optical transceiver from a remote transceiver of the respective optical transceiver. In at least some example embodiments, the set of optical parameters for the set of optical transceivers is determined based on an in-service channel associated with at least one additional optical transceiver. In at least some example embodiments, to determine the set of optical parameters for the set of optical transceivers, the at least one memory and the computer program code are configured to, with the at least one processor, cause the apparatus at least to split the set of optical channels into a plurality of subsets of optical channels and evaluate the subsets of optical channels sequentially, based on the forward error correction performance data, to optimize respective spectral efficiencies of the subsets of optical channels. In at least some example embodiments, to initiate configuration of the set of optical transceivers to support the set of optical parameters for the set of optical transceivers, the at least one memory and the computer program code are configured to, with the at least one processor, cause the apparatus at least to send, toward the optical transceivers in set of optical transceivers, a set of in-band configuration commands for configuring the set of optical transceivers to support the set of optical parameters for the set of optical transceivers. In at least some example embodiments, each of the optical transceivers has a respective output power associated therewith, wherein the respective output powers of the optical transceivers are defined based on an optical power of an amplified spontaneous emission noise obtained after optical signal to noise ratio equalization of a full spectrum amplified spontaneous emission noise pattern between line terminals. In at least some example embodiments, each of the optical transceivers has a respective output power associated therewith, wherein the respective output powers of the optical transceivers are set sequentially on the optical transceivers based on step-by-step adjustment based on an optical channel monitor configured to monitor the respective output powers of the optical transceivers. In at least some example embodiments, the apparatus is configured to reduce a convergence time to determine the set of optical parameters for the set of optical transceivers using the combined evaluation of the range of payload rates and the range of baud rates. In at least some example embodiments, an apparatus includes a set of optical transceivers configured to support a set of respective optical channels and a controller, wherein the controller is configured to determine, for the set of optical transceivers, based on a combined evaluation of a range of payload rates and a range of baud rates using forward error correction performance data associated with the set of optical channels, a set of optical parameters for the set of optical transceivers, and initiate configuration of the set of optical transceivers to support the set of optical parameters for the set of optical transceivers. In at least some example embodiments, a method includes determining, for a set of optical transceivers supporting a set of optical channels, based on a combined evaluation of a range of payload rates and a range of baud rates using forward error correction performance data associated with the set of optical channels, a set of optical parameters for the set of optical transceivers, and initiating configuration of the set of optical transceivers to support the set of optical parameters for the set of optical transceivers.

### BRIEF DESCRIPTION OF THE DRAWINGS

The teachings herein can be readily understood by considering the following detailed description in conjunction with the accompanying drawings, in which:
FIG. 1 depicts an example embodiment of an optical communication system configured to support tuning of optical transceivers for data rate capacity;
FIG. 2 depicts an example embodiment of method configured to support tuning of optical transceivers for data rate capacity;
FIGs. 3A - 3C depict example embodiments of methods for providing a search algorithm for evaluating payload rate and baud rate values within the context of supporting tuning of optical transceivers for data rate capacity;
FIG. 4 depicts an example embodiment of application of a search algorithm to parameters for illustrating movements of the search algorithm through values of the parameters to support identification of values of parameters configured to optimize data rate capacity;
FIG. 5 depicts an example embodiment of a terminal with optical transceivers for illustrating configuration of the optical transceivers to support optical parameters within the context of supporting tuning of optical transceivers for data rate capacity;
FIG. 6 depicts an example embodiment of method configured to support tuning of optical transceivers for data rate capacity; and
FIG. 7 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

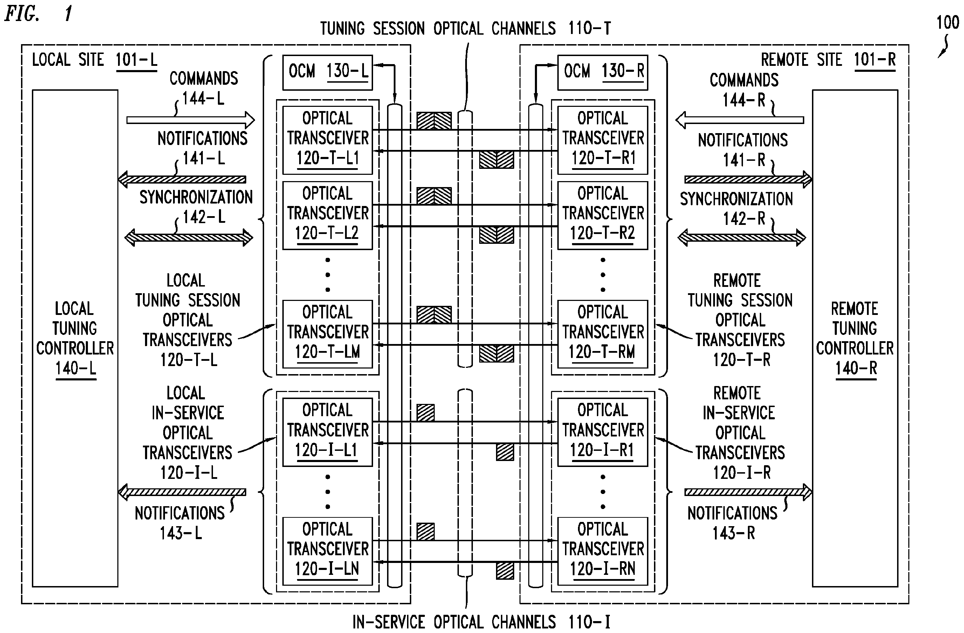

Various example embodiments for supporting optical communications are presented. Various example embodiments for supporting optical communications may be configured to support optical communications based on tuning of optical transceivers associated with a set of optical channels to optimize data rate capacity for the set of optical channels in a manner for optimizing spectral efficiency for the set of optical channels. Various example embodiments for supporting optical communications based on tuning of optical transceivers associated with a set of optical channels may be configured to support tuning of optical transceivers in a manner for finding and setting the optimum data rate capacity for a group of optical transceiver pairs (e.g., local and remote optical transceivers), within a minimum optical bandwidth, corresponding to the optimum spectral efficiency (e.g., when total optical bandwidth is fully loaded by optical channels, the overall capacity of a cable can be optimized). Various example embodiments for supporting optical communications based on tuning of optical transceivers associated with a set of optical channels may be configured to support tuning of optical transceivers based on forward error correction (FEC) performance data. Various example embodiments for supporting optical communications based on tuning of optical transceivers associated with a set of optical channels may be configured to support tuning of optical transceivers based on evaluation of ranges of payload rates and baud rates, based on FEC performance data, to determine payload rate values and baud rate values that optimize data rate capacity for the set of optical channels while optimizing spectral efficiency for the set of optical channels. Various example embodiments for supporting optical communications based on tuning of optical transceivers associated with a set of optical channels may be configured to support tuning of optical transceivers, based on use of a trial/error-based search algorithm configured to support evaluation of ranges of payload rates and baud rates based on FEC performance data to determine payload rate values and baud rate values that optimize data rate capacity for the set of optical channels, to optimize spectral efficiency for the set of optical channels. Various example embodiments for supporting optical communications based on tuning of optical transceivers associated with a set of optical channels may be configured to support tuning of optical transceivers, to optimize data rate capacity for the set of optical channels while optimizing spectral efficiency for the set of optical channels, by configuring the optical transceivers with optimal parameters configured to support the optimized data rate capacity for the set of optical channels while optimizing spectral efficiency for the set of optical channels. Various example embodiments for supporting optical communications based on tuning of optical transceivers associated with a set of optical channels may be configured to support tuning of optical transceivers, to optimize data rate capacity for the set of optical channels while optimizing spectral efficiency for the set of optical channels, by setting the output power on the optical channels gradually and sequentially on each pair of optical transceivers, optical channel after optical channel, slowly enough to prevent inducing optical transients on other optical channels that would affect traffic. It will be appreciated that these as well as various other example embodiments, and associated advantages or potential advantages, may be further understood by considering the optical communication system presented in FIG. 1.

FIG. 1 depicts an example embodiment of an optical communication system configured to support tuning of optical transceivers for data rate capacity.

The optical communication system 100 includes a pair of sites 101 including a local site 101-L and a remote site 101-R. The optical communication system 100 is configured to support optical communications between the local site 101-L and the remote site 101-R using a set of optical channels 110 supported by a set of optical transceivers 120 located at the sites 101. The sites 101 further include optical channel monitors (OCMs) 130 including an OCM 130-L located at local site 101-L and an OCM 130-R located at remote site 101-R. The sites 101 further include tuning controllers 140 including a local tuning controller 140-L located at local site 101-L and a remote tuning controller 140-R located at remote site 101-R.

The set of optical channels 110 supported by the set of optical transceivers 120 includes a set of tuning session optical channels 110-T supported by a set of tuning session optical transceivers 120-T (the set of optical channels between the sites 101 which are being tuned for maximizing data rate capacity with optimum spectral efficiency) and a set of in-service optical channels 110-I supported by a set of in-service optical transceivers 120-I (the set of optical channels between the sites 101 which are currently in service supporting traffic).

The tuning session optical channels 110-T include M optical channels supported by M pairs of tuning session optical transceivers 120-T including M local tuning session optical transceivers 120-T-L1 - 120-T-LM (collectively, local tuning session optical transceivers 120-T-L) located at the local site 101-L and M tuning session optical transceivers 120-T-R1 - 120-T-RM (collectively, remote tuning session optical transceivers 120-T-R) located at the remote site 101-R. More specifically, the tuning session optical channels 110-T include a first tuning session optical channel between local tuning session optical transceiver 120-T-L1 and remote tuning session optical transceiver 120-T-R1, a second tuning session optical channel between local tuning session optical transceiver 120-T-L2 and remote tuning session optical transceiver 120-T-R2, and so forth, until the M-th tuning session optical channel between the local tuning session optical transceiver 120-T-LM and remote tuning session optical transceiver 120-T-RM.

The in-service optical channels 110-I include N optical channels supported by N pairs of in-service optical transceivers 120-I including N local in-service optical transceivers 120-I-L1 - 120-I-LN (collectively, local in-service optical transceivers 120-I-L) located at the local site 101-L and N in-service optical transceivers 120-I-R1 - 120-I-RM (collectively, remote in-service optical transceivers 120-I-R) located at the remote site 101-R. More specifically, the in-service optical channels 110-I include a first in-service optical channel between local in-service optical transceiver 120-I-L1 and remote in-service optical transceiver 120-I-R1 and so forth, until theN-th in-service optical channel between the local in-service optical transceiver 120-I-LN and remote in-service optical transceiver 120-I-RM.

The optical transceivers 120 are configured to support communication of optical signals over the optical channels 110. The tuning session optical transceivers 120-T are configured to be automatically and dynamically tuned by the tuning controllers 140 to optimize data rate capacity for the set of tuning session optical channels 110-T while optimizing spectral efficiency for the set of tuning session optical channels 1 10-T. It will be appreciated that, after being tuned, the tuning session optical transceivers 120-T may then operate as in-service optical transceivers supporting communication of customer traffic between the local site 101-L and the remote site 101-R. The in-service optical transceivers 120-I are configured to support communication of customer traffic between the local site 101-L and the remote site 101-R. It will be appreciated that the optical transceivers 120 may be configured to support various other functions for supporting optical communications between local site 101-L and remote size 101-R.

The OCMs 130 are configured to perform optical channel monitoring functions for monitoring the optical signals communicated on the optical channels. The OCM 130-L is configured to monitor optical signals at local site 101-L, including monitoring the output power of optical signals transmitted by the optical transceivers 120-L at the local site 101-L for use in supporting configuration of the local tuning session optical transceivers 120-T-L for data rate capacity and spectral efficiency. The OCM 130-R is configured to monitor optical signals at remote site 101-R, including monitoring the output power of optical signals transmitted by the optical transceivers 120-R at the remote site 101-R for use in supporting configuration of the remote tuning session optical transceivers 120-T-R for data rate capacity and spectral efficiency. It will be appreciated that the OCMs 130 may be configured to support various other functions for supporting tuning of the tuning session optical transceivers 120-T.

The tuning controllers 140 are configured to perform various control functions for controlling optical communications by the optical transceivers 120 over the optical channels 110. As discussed further below, for example, the tuning controllers 140 may be configured to support managing and synchronizing operations of optical transceivers 120, support tuning of tuning session optical transceivers 120-T, or the like, as well as various combinations thereof.

The tuning controllers 140 are configured to manage and synchronize operations through in-band messages exchanged by the tuning controllers 140. The in-band messages exchanged by the tuning controllers 140 include notifications 141 and synchronizations 142 exchanged over tuning session optical channels 110-T and notifications 143 exchanged over in-service optical channels 110-I.

The notifications 141 exchanged between the tuning controllers 140 via the tuning session optical channels 110-T are illustrated in FIG. 1 (illustratively, the notifications 141-L provided from the local tuning session optical transceivers 120-T-L to the local tuning controller 140-L after being received over the tuning session optical channels 110-T from the remote tuning session optical transceivers 120-T-R and, similarly, the notifications 141-R provided from the remote tuning session optical transceivers 120-T-R to the remote tuning controller 140-R after being received over the tuning session optical channels 110-T from the local tuning session optical transceivers 120-T-L). The notifications 141 may include performance data, other types of notifications or data which may be exchanged between the tuning controllers 140 within the context of the set of tuning session optical channels 1 10-T, or the like, as well as various combinations thereof, any or all of which may be used to evaluate combinations of payload rate and baud rate for use in controlling tuning of the tuning session optical transceivers 120-T for data rate capacity of the tuning session optical channels 110-T for which optical tuning is being performed. The performance data of such notifications 141 may include FEC performance data, other types of performance data, or the like, as well as various combinations thereof. It will be appreciated that the notifications 141 may include various other types of information, at least a portion of which may be applied for supporting tuning of the tuning session optical transceivers 120-T for data rate capacity of the tuning session optical channels 110-T for which optical tuning is being performed.

The synchronizations 142 exchanged between the tuning controllers 140 via the tuning session optical channels 110-T are illustrated in FIG. 1 (illustratively, the synchronizations 142-L exchanged between the local tuning session optical transceivers 120-T-L and the local tuning controller 140-L after being received over the tuning session optical channels 110-T from the remote tuning session optical transceivers 120-T-R or before being sent over the tuning session optical channels 110-T toward the remote tuning session optical transceivers 120-T-R and, similarly, the synchronizations 142-R exchanged between the remote tuning session optical transceivers 120-T-R and the remote tuning controller 140-R after being received over the tuning session optical channels 110-T from the local tuning session optical transceivers 120-T-L or before being sent over the tuning session optical channels 110-T toward the local tuning session optical transceivers 120-T-L).

The notifications 143 exchanged between the tuning controllers 140 via in-service optical channels 110-I are illustrated in FIG. 1 (illustratively, the notifications 143-L provided from the local in-service optical transceivers 120-I-L to the local tuning controller 140-L after being received over the in-service optical channels 110-I from the remote in-service optical transceivers 120-I-R and, similarly, the notifications 143-R provided from the remote in-service optical transceivers 120-I-R to the remote tuning controller 140-R after being received over the in-service optical channels 110-I from the local in-service optical transceivers 120-LL). The notifications 143 may include performance data, other types of notifications or data which may be exchanged between the tuning controllers 140 within the context of the set of in-service optical channels 110-I, or the like, as well as various combinations thereof, any or all of which may be used to evaluate combinations of payload rate and baud rate for use in controlling tuning of the tuning session optical transceivers 120-T for data rate capacity of the tuning session optical channels 110-T for which optical tuning is being performed. The performance data of such notifications 143 may include FEC performance data, other types of performance data, or the like, as well as various combinations thereof. It will be appreciated that the notifications 143 may include various other types of information, at least a portion of which may be applied for supporting tuning of the tuning session optical transceivers 120-T for data rate capacity of the tuning session optical channels 110-T for which optical tuning is being performed.

The tuning controllers 140 are configured to support tuning of optical transceivers 120. The tuning controllers 140 are configured to support tuning of tuning session optical transceivers 120-T to optimize data rate capacity on tuning session optical channels 110-T supported by the tuning session optical transceivers 120-T. The tuning controllers 140 are configured to support tuning of tuning session optical transceivers 120-T to optimize data rate capacity on tuning session optical channels 110-T supported by the tuning session optical transceivers 120-T while also optimizing spectral efficiency.

The tuning controllers 140 are configured to support tuning of optical transceivers 120 by determining optical parameters for the tuning session optical transceivers 120-T and controlling configuration of the tuning session optical transceivers 120-T to operate according to the optical parameters determined for the tuning session optical transceivers 120-T. The optical parameters may include bit/symbol, payload rate (PR), baud rate (BR), output power, FEC ratio, carrier phase recovery, root raised cosine filter shape, one or more optical transmission parameters, or the like, as well as various combinations thereof.

The tuning controllers 140, as indicated above, are configured to support tuning of optical transceivers 120 by determining optical parameters for the tuning session optical transceivers 120-T. The tuning controllers 140 are configured to determine optical parameters for the tuning session optical transceivers 120-T based on FEC performance data (e.g., FEC performance data reported to the tuning controllers 140 by the tuning session optical transceivers 120-T as part of the notifications 141 and, optionally, FEC performance data reported to the tuning controllers 140 by the in-service optical transceivers 120-I as part of the notifications 143). The tuning controllers 140 are configured to determine optical parameters for the tuning session optical transceivers 120-T based on evaluation of payload rate and baud rate combinations. The tuning controllers 140 are configured to determine optical parameters for the tuning session optical transceivers 120-T based on evaluation of payload rate and baud rate combinations based on FEC performance data. The tuning controllers 140 are configured to determine optical parameters for the tuning session optical transceivers 120-T based on evaluation of payload rate and baud rate combinations, based on FEC performance data, using a search algorithm configured to perform a trial and error search for optimum payload rate and baud rate values in a range of payload rates and a range of baud rates. The tuning controllers 140 are configured to support various other functions for determining optical parameters for the tuning session optical transceivers 120-T.

The tuning controllers 140, as indicated above, are configured to support tuning of optical transceivers 120 by controlling configuration of the tuning session optical transceivers 120-T to operate according to the optical parameters determined for the tuning session optical transceivers 120-T. The tuning controllers 140 may configure the tuning session optical transceivers 120-T to operate according to optical parameters determined for the tuning session optical transceivers 120-T by sending configuration commands (illustratively, commands 144) to the tuning session optical transceivers 120-T (illustratively, local tuning controller 140-L may configure the local tuning session optical transceivers 120-T-L by sending commands 144-L to the local tuning session optical transceivers 120-T-L and the remote tuning controller 140-R may configure the remote tuning session optical transceivers 120-T-R by sending commands 144-R to the remote tuning session optical transceivers 120-T-R). The tuning controllers 140 also may control the setting of the output power of the tuning session optical transceivers 120-T (e.g., after the optical transmission parameters are configured on the tuning session optical transceivers 120-T for the tuning session optical channels 1 10-T, the output power of the tuning session optical transceivers 120-T may be set sequentially and gradually using the OCMs 130 based on monitoring of the output optical signals of the tuning session optical transceivers 120-T by the OCMs 130). The tuning controllers 140 are configured to support various other functions for controlling configuration of the tuning session optical transceivers 120-T to operate according to the optical parameters determined for the tuning session optical transceivers 120-T.

It will be appreciated that, although omitted from FIG. 1 for purposes of clarity, various network elements may be disposed between local site 101-L and remote site 101-R (e.g., reconfigurable optical add/drop multiplexers (ROADMs) or other types of network elements, although it is noted that optical pass-throughs may be preconfigured as wavelength and spacing of new channels may vary within in a defined optical bandwidth).

It will be appreciated that, although primarily presented in FIG. 1 with respect to example embodiments in which the tuning controllers are local to the sites of the optical transceivers being tuned, in at least some example embodiments either or both of the tuning controllers 140 used for controlling tuning of the optical transceivers 120 at the sites 101 may be located in a central controller (e.g., a network controller or other suitable controller), a single tuning controller may be used for controlling tuning of the optical transceivers 120 at the sites 101, or the like.

It will be appreciated that, although primarily presented in FIG. 1 with respect to example embodiments in which tuning of optical transceivers for data rate capacity in a manner that optimizes spectral efficiency is performed within the context of a specific type of optical communication system, tuning of optical transceivers for data rate capacity in a manner that optimizes spectral efficiency may be performed within the context of various other types of optical communication systems.

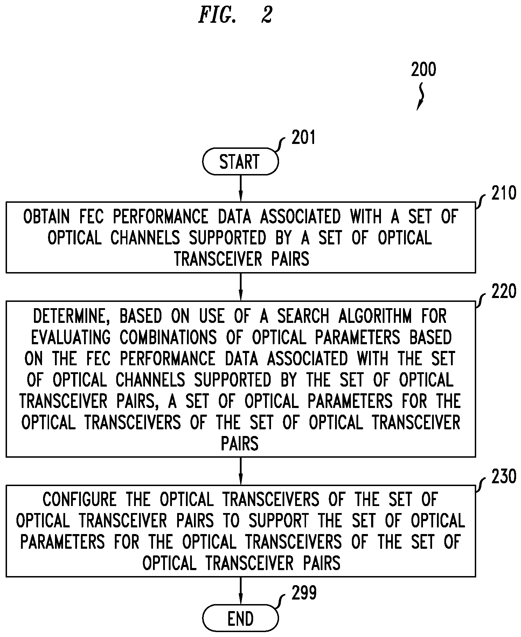

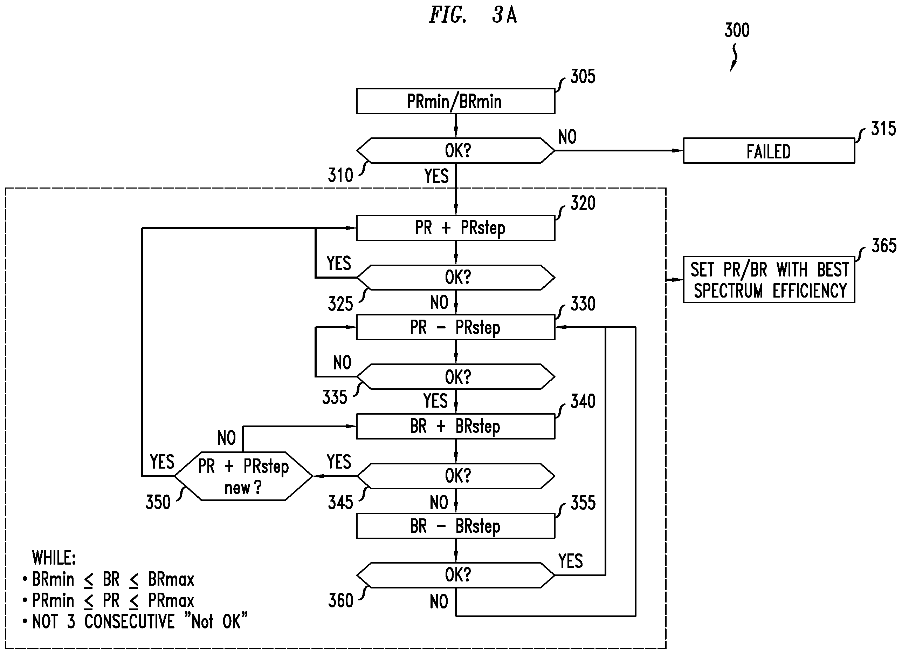

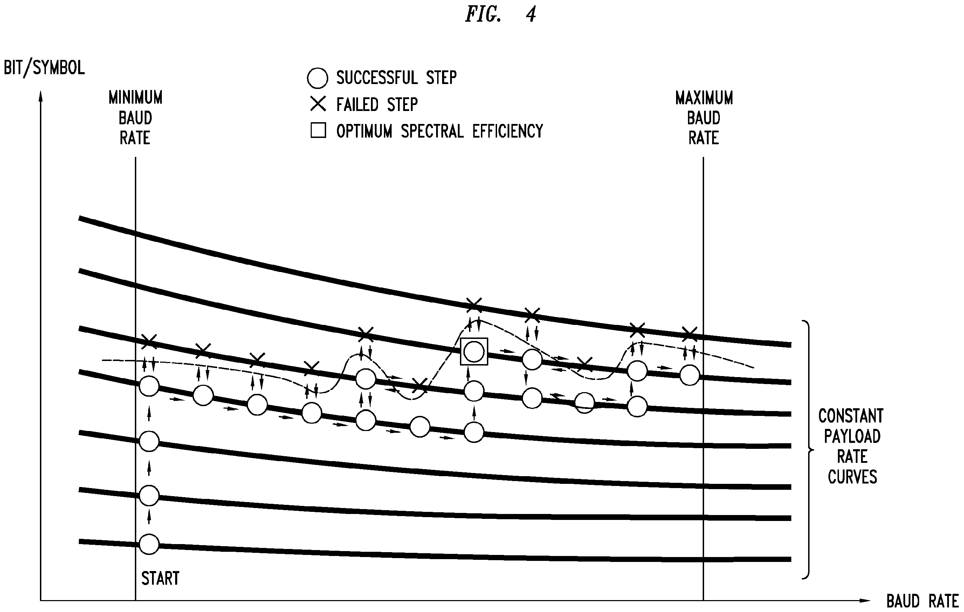

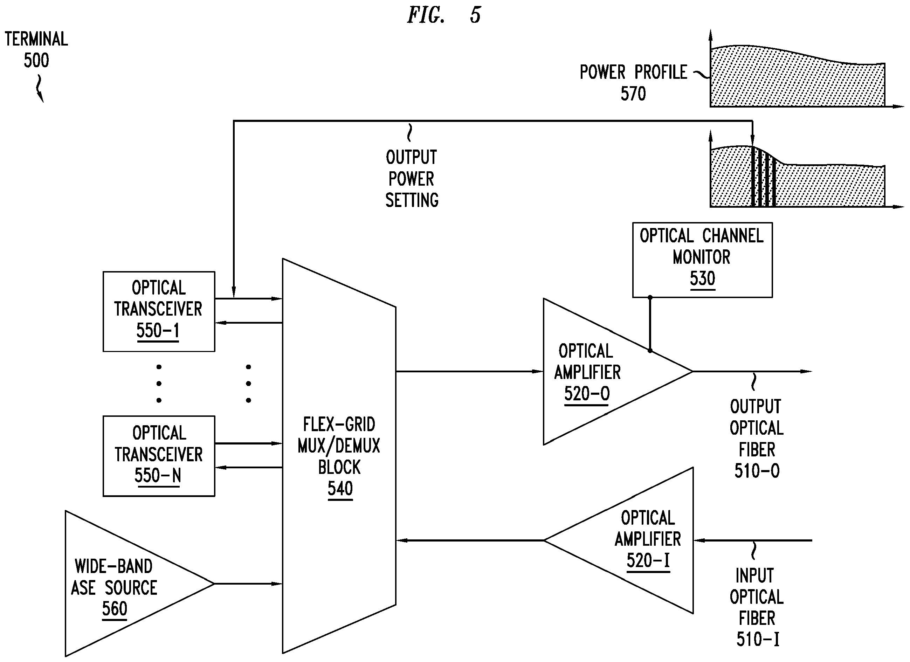

FIG. 2 depicts an example embodiment of method configured to support tuning of optical transceivers for data rate capacity. It will be appreciated that, although primarily presented herein as being performed serially, at least a portion of the functions of method 200 may be performed contemporaneously or in a different order than as presented with respect to FIG. 2. At block 201, the method 200 begins. At block 210, obtain FEC performance data associated with a set of optical channels supported by a set of optical transceiver pairs. At block 220, determine, based on use of a search algorithm for evaluating combinations of optical parameters based on the FEC performance data associated with the set of optical channels supported by the set of optical transceiver pairs, a set of optical parameters for the optical transceivers of the set of optical transceiver pairs. At block 230, configure the optical transceivers of the set of optical transceiver pairs to support the set of optical parameters for the optical transceivers of the set of optical transceiver pairs. At block 299, the method 200 ends. It will be appreciated that various example embodiments for use of a search algorithm for determining the set of optical parameters for use in configuring the set of optical transceiver pairs for optimal data rate capacity with optimal spectral efficiency may be further understood by way of reference to FIGs. 3A- 3C and FIG. 4. It will be appreciated that various example embodiments for configuration of the set of optical transceiver pairs for optimal data rate capacity based on the set of optical parameters determined for the set of optical transceiver pairs may be further understood by way of reference to FIG. 5.

The data rate capacity optimization, as indicated above, may be based on a search algorithm which supports a trial and error approach to maximizing the spectral efficiency (spectral efficiency = payload rate / channel width) for a group of optical channels. The search algorithm is configured to evaluate payload rates within a range of payload rates and baud rates within a range of baud rates to determine the optimal configuration of optical transceivers that maximizes spectral efficiency. The search algorithm is configured to evaluate payload rates within a range of payload rates by stepping through payload rates at payload rate steps within the payload rate range to evaluate baud rates within the range of baud rates by stepping through baud rates at baud rate steps within the baud rate range. The ranges and steps used for payload rate and baud rate in the search algorithm are discussed further below. In at least some example embodiments of the search algorithm, in addition to evaluation of payload rates and baud rates, occupancy ratios also may be evaluated.

The application of the search algorithm to the group of optical channels for which tuning is being performed may be performed in various ways. For example, the full group of optical channels for which tuning is being performed may be evaluated together as a group using the search algorithm to maximize the spectral efficiency for the full group of optical channels. For example, the full group of optical channels for which tuning is being performed may be split into multiple subsets of optical channels and the search algorithm may be applied to each of the multiple subsets of optical channels to maximize the spectral efficiency for each of the multiple subsets of optical channels, which thereby maximizes the spectral efficiency for the full group of optical channels. For example, where the full group of optical channels for which tuning is being performed is split into subsets of optical channels and the search algorithm is applied to each of the multiple subsets of optical channels, the search algorithm may be applied to the multiple subsets of optical channels sequentially in order to search for the best spectral efficiency for the subsets of optical channels sequentially. It will be appreciated that, where the full group of optical channels for which tuning is being performed is split into subsets of optical channels and the search algorithm is applied to each of the subsets of optical channels, the search algorithm may be applied to the subsets of optical channels in various other ways (e.g., in parallel for each of the subsets of optical channels, using a combination of parallel and sequential application of the search algorithm for various combinations of subsets of the optical channels, and so forth). The application of the search algorithm to the group of optical channels for which tuning is being performed may be performed in various other ways.

The maximum channel width associated with maximizing the spectral efficiency for a group of optical channels may depend on whether guard bands are used between optical channels. For example, where guard bands are not used between optical channels, the maximum channel width may be defined as: max channel width = bandwidth / M, where M is the total number of channels in the group (e.g., the full group of optical channels for which tuning is being performed). For example, where guard bands are used between optical channels, the maximum channel width may be defined as: max channel width = (bandwidth - ∑guard bands) / M, where M is the total number of channels in the group (e.g., the full group of optical channels for which tuning is being performed).

In at least some example embodiments of the search algorithm, the payload rates and baud rates may be evaluated by evaluating payload rates within a range of payload rates (PRmin ≤ PR ≤ PRmax, which also may be referred to as the payload rate range) and evaluating baud rates within a range of baud rates (BRmin ≤ BR ≤ BRmax, which also may be referred to as the baud rate range). The payload rate range may be defined based on the capabilities of the optical transceivers. The baud rate range may be defined as [transceiver minimum baud rate, transceiver maximum baud rate], where the transceiver maximum baud rate may be based on max channel width * occupancy ratio (e.g., where the occupancy ratio of a baud rate within a given channel width may be defined as an input parameter. In at least some example embodiments, a signal to noise ratio (SNR) measured in open systems (e.g., generalized OSNR (as Generalized Optical SNR, which is a signal to noise ratio with linear and non-linear contributions due to the optical transmission through an end-to-end fiber optic network), ESNR, or the like) measured in open systems may be used to reduce the payload rate range and the baud rate range. In at least some example embodiments, each of the optical channels (e.g., all optical channels of the group or all optical channels of a subset of optical channels of the group where the group is split into subsets of optical channels) may be configured at the same payload rate and baud rate at each step of the search.

In at least some example embodiments of the search algorithm, the movements may be performed on two dimensions as follows: (1) movement of the payload rate at a constant baud rate and (2) movement of the baud rate at a constant payload rate. The payload rate steps during evaluation of payload rates within the payload rate range may be fixed by the minimum granularity of the optical transceivers. The baud rate steps during evaluation of the baud rates within the baud rate range may be fixed in various ways, such as fixed at a minimum value, fixed from an input value (within the capabilities of the optical transceivers), defined based on the entire baud rate granularity of the optical transceivers, or the like. It is noted that, since the baud rate range may not be continuous, the baud rate may be increased at the nearest value above the baud rate step if an exact value does not exist. It is further noted that, when the payload rate is modified, if the exact baud rate value is not found then the next lower baud rate value may be chosen instead. This rule allows the same spacing to be maintained.

It will be appreciated that evaluation of the payload rate values in the payload rate range and the baud rate values in the baud rate range may be performed in various ways (e.g., in terms of order of evaluation, order and magnitude of steps, spectral efficiency evaluation points, and so forth), at least a few of which are presented with respect to FIGs. 3A - 3C.

FIGs. 3A - 3C depict example embodiments of methods for providing a search algorithm for evaluating payload rate and baud rate values within the context of supporting tuning of optical transceivers for data rate capacity.

As depicted in each of FIGs. 3A - 3C, the search algorithm is configured to support browsing and evaluation of various combinations of payload rates within payload rate ranges and baud rates within baud rate ranges, including various orders of evaluation of payload rate and baud rate, order and magnitude of payload rate steps and baud rate steps, spectral efficiency evaluation points relative to payload rate evaluations and steps and baud rate evaluations and steps, and so forth.

As depicted in each of FIGs. 3A - 3C, the search algorithm may be configured to maintain the spectral efficiency of each "OK" point in the search algorithm in order to track the optimum spectrum efficiency and the payload rate and baud rate combination associated with the optimum spectral efficiency, so as to set the optical channels at the payload rate and baud rate combination associated with the optimum spectral efficiency based on configuration of the optical transceivers supporting the optical channels.

As depicted in each of FIGs. 3A - 3C, the search algorithm may be configured to operate to evaluate combinations of payload rates and baud rates under certain conditions and, based on a determination that one or more conditions are met or not met, to output the combination of payload rate and baud rate that provide the best spectral efficiency. In the example of FIGs. 3A - 3C, the search algorithm continues to evaluate combinations of payload rates and baud rates as long as a set of conditions continues to be satisfied (illustratively, while the payload rate remains within the payload rate range, while the baud rate remains within the baud rate range, and while the search algorithm continues to operate without three consecutive "Not OK" determinations at "OK" points in the search algorithm). It will be appreciated that various other conditions may be used as the basis for controlling running of the search algorithm to evaluate combinations of payload rates and baud rates for optimizing spectral efficiency for a set of optical channels.

FIG. 3A depicts a first example embodiment of a method for evaluating payload rate and baud rate values within the context of supporting tuning of optical transceivers for data rate capacity. The method 300 begins at block 305. At block 305, the search is initialized by setting the payload rate to the minimum payload rate in the payload rate range (PRmin) and setting the baud rate to the minimum baud rate in the baud rate range (BRmin). At block 310, an OK determination is made. If the OK determination at block 310 is negative then the method 300 proceeds to block 315, at which point the method 300 ends with failure. If the OK determination at block 310 is positive then the method 300 proceeds to block 320. At block 320, the payload rate is increased by the payload rate step (PRstep). At block 325, an OK determination is made. If the OK determination at block 325 is positive then the method 300 returns to block 320 for an additional increase of the payload rate by the payload rate step. If the OK determination at block 325 is negative then the method 300 proceeds to block 330. At block 330, the payload rate is decreased by the payload rate step. At block 335, an OK determination is made. If the OK determination at block 335 is negative then the method 300 returns to block 330, at which point the payload rate is decreased by the payload rate step. If the OK determination at block 335 is positive then the method 300 proceeds to block 340. At block 340, the baud rate is increased by the baud rate step (BRstep). At block 345, an OK determination is made. If the OK determination at block 345 is positive then the method 300 proceeds to block 345. At block 345, a determination is made as to whether the PR+PR step (block 320) is a new value to verify. If the PR+PR step (block 320) is not a new value to verify then the method 300 returns to block 340 for an additional increase of the baud rate, otherwise the method 300 returns to block 320 for an additional increase of the payload rate by the payload rate step. If the OK determination at block 345 is negative then the method 300 proceeds to block 355. At block 355, the baud rate is decreased by the baud rate step (BRstep). At block 360, an OK determination is made. If the OK determination at block 360 is positive then the method 300 returns to block 330 for an additional decrease of the payload rate by the payload rate step. If the OK determination at block 360 is negative then the method 300 returns to block 330 for an additional decrease of the payload rate by the payload rate step. It will be appreciated that the method 300 will continue to operate while the conditions continue to be satisfied. As illustrated in FIG. 3A, after at least one of the conditions is no longer satisfied, the method 300 proceeds to block 365, where the combination of payload rate and baud rate associated with the best spectral efficiency determined during the running of the method 300 of FIG. 3A are output for use in configuring the optical transceivers for the set of optical channels. It will be appreciated that various other conditions may be used to control execution of the search algorithm for optimizing spectral efficiency.

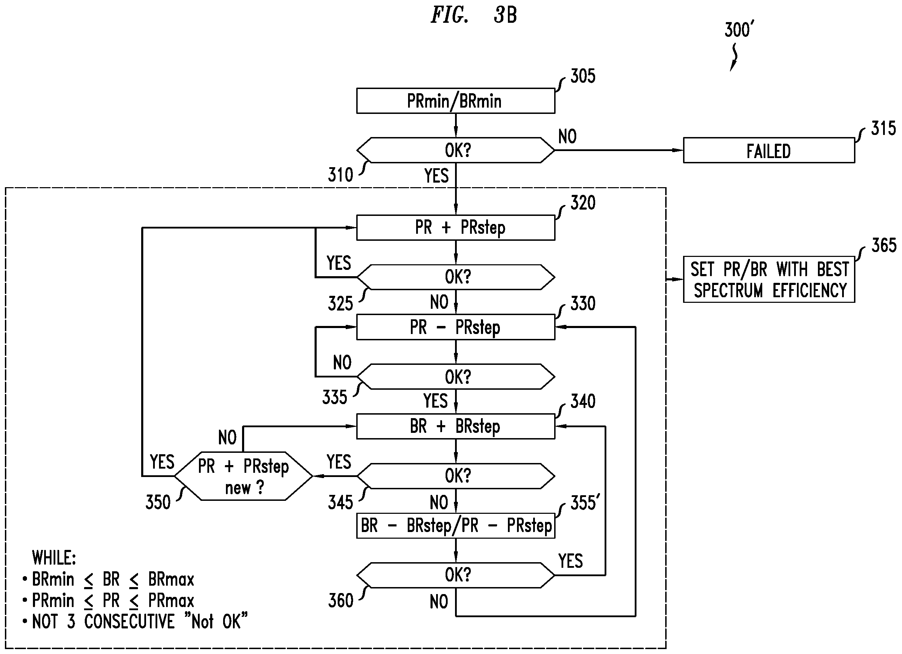

FIG. 3B depicts a second example embodiment of a method for evaluating payload rate and baud rate values within the context of supporting tuning of optical transceivers for data rate capacity. The method 300' of FIG. 3B is almost identical to the method 300 of FIG. 3A, with a few exceptions. First, step 355' of FIG. 3B which replaces step 355 of FIG. 3A not only includes decreasing the baud rate by the baud rate step (BRstep) as in step 355 of FIG. 3A, but also decreases the payload rate by the payload rate step (PRstep). Second, while the method 300' returns to block 330 for an additional decrease of the payload rate by the payload rate step based on a determination that the OK determination at block 360 is negative (as in the method 300 of FIG. 3A), the method 300' instead returns to block 340 for an additional increase of the baud rate by the baud rate step (BRstep) based on a determination that the OK determination at block 360 is positive (which is different than the method 300 of FIG. 3A where the method returns to block 330 for an additional decrease of the payload rate by the payload rate step based on a determination that the OK determination at block 360 is positive). In other words, instead of going back to the previous baud rate at constant payload rate as in method 300 of FIG. 3A, the method 300' of FIG. 3B returns to the same baud rate and also decreases the payload rate at the same step. As illustrated in FIG. 3B, after at least one of the conditions is no longer satisfied, the method 300' proceeds to block 365, where the combination of payload rate and baud rate associated with the best spectral efficiency determined during the running of the method 300' of FIG. 3B are output for use in configuring the optical transceivers for the set of optical channels. It will be appreciated that various other conditions may be used to control execution of the search algorithm for optimizing spectral efficiency.

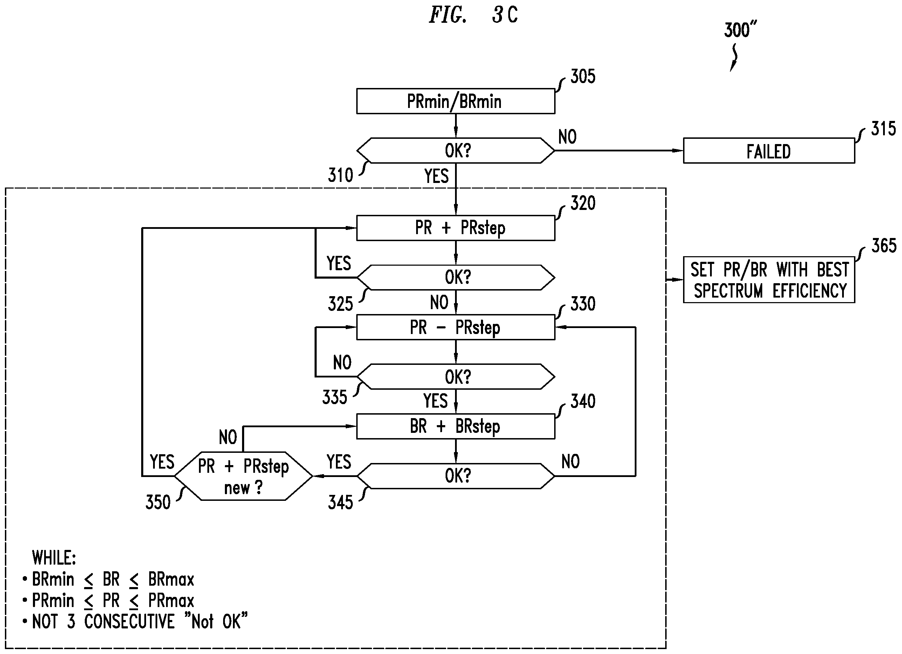

FIG. 3C depicts a third example embodiment of a method for evaluating payload rate and baud rate values within the context of supporting tuning of optical transceivers for data rate capacity. The method 300" of FIG. 3C is similar to portions of the method 300 of FIG. 3A and to portions of the method 300' of FIG. 3B, but omits a few of the blocks of the method 300 of FIG. 3A and the method 300' of FIG. 3B. Namely, blocks 355 and 360 of the method 300 of FIG. 3A and blocks 355' and 360 of the method 300' of FIG. 3B are omitted from the method 300" of FIG. 3C. Additionally, while the method 300" proceeds to block 345 for determining whether the PR+PR step (block 320) is a new value to verify based on a determination that the OK determination at block 345 is positive (as in the method 300 of FIG. 3A and the method 300' of FIG. 3B), the method 300" instead returns to block 330 for an additional decrease of the payload rate by the payload rate step (PRstep) based on a determination that the OK determination at block 345 is negative (which is different than the method 300 of FIG. 3A where the method proceeds to block 355 for an additional decrease of the baud rate by the baud rate step based on a determination that the OK determination at block 345 is negative, and which is also different than the method 300' of FIG. 3B where the method 300' proceeds to block 355' of FIG. 3B for decreasing the baud rate by the baud rate step (BRstep) and decreasing the payload rate by the payload rate step (PRstep) based on a determination that the OK determination at block 345 is negative). It is noted that, while skipping two steps in the method 300" of FIG. 3C is not guaranteed to be successful in finding a combination of payload rate and baud rate that maximizes spectral efficiency of the group of optical channels, skipping two steps in the method 300" of FIG. 3C is more likely to succeed that the method 300' of FIG. 3B as it is at a payload rate below the payload rate of a step that was previously successful at the same baud rate, which implies a simultaneous movement over both the payload rate and baud rate dimensions. As illustrated in FIG. 3C, after at least one of the conditions is no longer satisfied, the method 300" proceeds to block 365, where the combination of payload rate and baud rate associated with the best spectral efficiency determined during the running of the method 300" of FIG. 3C are output for use in configuring the optical transceivers for the set of optical channels. It will be appreciated that various other conditions may be used to control execution of the search algorithm for optimizing spectral efficiency.

It will be appreciated that, although primarily presented with respect to specific example embodiments for evaluating payload rate and baud rate values within the context of a search algorithm for supporting tuning of optical transceivers for data rate capacity (e.g., in the methods of FIGs. 3A - 3C, which include specific numbers, types, and arrangements of steps, specific arrangements of evaluating payload rate and baud rate values, specific arrangements of stepping through increases and decreases of payload rate and increases and decreases of baud rates, specific conditions which may be used to trigger termination of the methods, and so forth), various other example embodiments for evaluating payload rate and baud rate values may be used within the context of a search algorithm for supporting tuning of optical transceivers for data rate capacity (e.g., using various other numbers, types, and arrangements of steps). For example, various example embodiments for evaluating payload rate and baud rate values within the context of a search algorithm for supporting tuning of optical transceivers for data rate capacity may be configured to support one or more other arrangements of evaluating payload rate and baud rate values, one or more other ways of stepping through increases and decreases of payload rate and increases and decreases of baud rates, one or more other conditions which may be used to trigger termination of the methods, or the like, as well as various combinations thereof). For example, various example embodiments for evaluating payload rate and baud rate values within the context of a search algorithm for supporting tuning of optical transceivers for data rate capacity may be configured to support faster convergence, more accurate convergence, or the like. It will be appreciated that various other example embodiments may be employed for evaluating payload rate and baud rate values within the context of a search algorithm during tuning of optical transceivers for data rate capacity while also optimizing spectral efficiency.

It is noted that various aspects of the search algorithm may be further understood by considering successive movements of the search algorithm applied to a simulated case in which the parameters bit/symbol, baud rate, and payload rate reproduce the capabilities of a given optical transceiver module, as presented in FIG. 4.

FIG. 4 depicts an example embodiment of application of a search algorithm to parameters for illustrating movements of the search algorithm through values of the parameters to support identification of values of parameters configured to optimize data rate capacity. It will be appreciated that the example of FIG. 4 corresponds to the method 300 of FIG. 3A.

In FIG. 4, the curves are constant payload rate curves illustrating equal payload rates defined according to bit/symbol (the y-axis) and baud rate (the x-axis). In other words, for each curve, the payload rate is constant over the length of the curve for illustrating the combination of bit/symbol and baud rate that provides that constant payload rate.

In FIG. 4, the bottom payload rate curve and the top payload rate curve represent the minimum payload rate and the maximum payload rate, respectively, which define the payload rate range for the search algorithm and, therefore, each of the depicted steps of the search algorithm falls within those lines (i.e., the payload rate range).

In FIG. 4, the two vertical lines parallel with the y-axis represent the minimum baud rate and maximum baud rate which define the baud rate range for the search algorithm and, therefore, each of the depicted steps of the search algorithm falls within those lines (i.e., the baud rate range).

In FIG. 4, the circles and "X"s represent steps through the search algorithm (e.g., "OK determinations" in FIG. 3A), where the circles represent successful steps in which the OK determinations were positive and the "X"s represent failed steps in which the OK determinations were negative, and the lines with the arrows indicate the order of execution of the steps through the search algorithm.

In FIG. 4, the search algorithm begins with an initial setting (illustratively, the minimum payload rate (bottom payload rate curve) and minimum baud rate) and then proceeds through a number of steps for evaluating various combinations of payload rate and baud rate as payload rate and baud rate are modified in steps during execution of the search algorithm. In the first step (the first circle in the chain of steps, which is the bottom left circle), a combination of the minimum payload and minimum baud rate is evaluated and, since the OK determination is positive at step 1, the payload rate is increased (to the next payload rate curve) and the baud rate is kept at the minimum baud rate in the second step (the second circle in the chain of steps, which is adjacent to the circle of the first step). In the second through fourth steps (the three circles and "X" closest to the minimum baud rate line), the payload rate continues to be increased while keeping the baud rate at the minimum baud rate since the OK determinations for these steps, evaluating these combinations of payload rate and baud rate, are positive. The search algorithm then continues to move between the fourth and sixth payload rates (constant payload rate curves) while moving along the payload rate curves as baud rate is increased. The search algorithm continues in this manner, increasing and decreasing payload rate and baud rate in various ways under various conditions until conditions which trigger termination of the search algorithm are detected at the final step (the rightmost circle which is closest to the maximum baud rate line).

In FIG. 4, as indicated above, forty-two steps (again, "OK determinations" in FIG. 3A) were executed before conditions were satisfied that caused termination of the search algorithm. The search algorithm maintains the data rate capacity determined at each step of the search algorithm and determines that, although forty-two steps were executed by the search algorithm, the maximum data rate capacity identified during execution of the search algorithm actually occurred at the twenty-sixth step of the search algorithm (which is marked in FIG. 4 with a square). Accordingly, the payload rate and baud rate associated with the twenty-sixth step of the search algorithm will be used as the basis for configuring the optical transceivers associated with the group of channels for which the search algorithm is executed for maximizing data rate capacity with optimum spectral efficiency.

The support for autonomous tuning of optical transceivers based on FEC performance data may be performed using various types of FEC performance data which may be obtained in various ways. International Telecommunication Union Telecommunication Standardization Sector (ITU-T) G.709 standard describes the Optical Transport Network (OTN) frame in which monitoring of Optical Transport Unit (OTU) section (SM - Section Monitoring) as well as Optical Data Unit (ODU) section (PM - Path Monitoring) is supported. The errors on OTU and ODU sections typically are counted over the payload content (Optical Payload Unit (OPU) payload) via the Bit Interleaved Parity (BIP)-8 byte. The next byte also allows the BIP-8 to be retrieved from the other end of the section through the Backward Error Indication (BEI) / Backward Incoming Alignment Error (BIAE). However, the correction of errors by the FEC via the use of a 4x256 byte extension of the OTN frame typically occurs before the successive de-encapsulation of the OTU, ODU, and OPU layers. Consequently, the error counting on OTU and ODU sections typically is done after correction of the FEC and, therefore, may not be able to be used to evaluate the real performance of the optical transmission of a given channel from one end to the other end of the network: hence, evaluation of the performance of the optical transmission of a given channel from one end to the other end of the network generally will be done before correction. Moreover, the error counting, and then the FEC correction, typically are carried out over the entire frame. So, while FEC error counting is a suitable mechanism to measure optical transmission performance, there is not expected to be a standard byte in OTN that allows retrieval of this information from the far end. In at least some example embodiments, the parameter that is used to measure the transmission performance on an optical channel can be the quality factor Q² in decibels which is defined from FEC error counting at the receiver. In at least some example embodiments, the quality factor parameter that is used to measure the transmission performance on an optical channel may be transmitted securely to the far end through the OTN frame within an OTU overhead reserved byte within the proprietary OTU section. It will be appreciated that this quality factor parameter may be provided continuously if error counting can be done. The successful/failed state at each trial (e.g., each trial in the algorithms of FIGs. 3A - 3C) may be defined through the assessment of FEC performance data, based on the quality factor parameter received from the far end, on various combinations of optical transceivers (e.g., the optical transceivers constituting the group of optical channels being tuned, the optical transceivers constituting the group of optical channels being tuned as well as in-service optical transceivers emitting/receiving optical signals using the same medium as the optical transceivers associated with the group of optical channels being tuned, or the like). It will be appreciated that various other types of FEC performance data may be used to support autonomous tuning of optical transceivers.

The support for autonomous tuning of optical transceivers based on FEC performance data may include support for setting the output power of the optical transceivers. In long haul optical transmission systems, especially in submarine networks where distances may reach thousands of kilometers, Erbium doped fiber amplifiers (EDFAs), or other suitable types of optical amplifiers, may be placed along the optical fiber (e.g., every 50 km to 100 km or using other suitable distances) to compensate attenuation of the optical signal along the optical fiber. Each EDFA works at constant output power irrespective of variations that could occur on the input power. When the optical transmission system works with a few optical channels, the optical spectrum free of channels may be loaded with an unmodulated white noise loading signal to get a fully loaded spectrum, equalized in optical power and stable. Such loading signal may be provided by a wide band amplified spontaneous emission (ASE) source or any other suitable type of source that can be dynamically shaped/filtered. In at least some WDM networks, channels are combined with flex grid filters as wavelength selective switches (WSSs) that can be reconfigured remotely. In order to get optical channels with an equal and predictive performance, the system may be pre-tuned with an equalized OSNR on the receiver side of the optical transceivers. At each optical transceiver reconfiguration requiring a modification of the baud rate, therefore requiring a modification of the wavelength and width, the output power of every optical transceiver may be computed from a power profile of the whole spectrum bandwidth (e.g., an ASE power profile or other suitable type of power profile) within the same bandwidth. Once the new transmission parameters are configured on the optical channel, the output power of every optical transceiver is set sequentially, gradually and slowly by using an optical channel monitor (OCM) to reach the newly computed channel power. It will be appreciated that, although primarily presented with respect to example embodiments in which a power profile is used to compute the output power of the optical transceivers, in at least some example embodiments one or more other types of input information (e.g., one or more other profiles or shapes, one or more tables of values, or the like, as well as various combinations thereof) may be used to compute the output power of the optical transceivers. An example embodiment configured to support setting of optical transceiver output power of optical transceivers within the context of autonomous tuning of the optical transceivers based on FEC performance data is presented with respect to FIG. 5.

FIG. 5 depicts an example embodiment of a terminal with optical transceivers for illustrating configuration of the optical transceivers to support optical parameters within the context of supporting tuning of optical transceivers for data rate capacity. More specifically, FIG. 5 depicts setting of optical transceiver output power of optical transceivers within the context of supporting autonomous tuning of the optical transceivers, based on FEC performance data, for data rate capacity. The terminal 500 includes a pair of optical fibers 510 including an input optical fiber 510-I and an output optical fiber 510-0, a pair of optical amplifiers 520 including an optical amplifier 520-I associated with the input optical fiber 510-I and an optical amplifier 520-0 associated with the output optical fiber 510-0, an OCM 530-0 associated with the optical amplifier 520-O, a flex-grid mux/demux block 540, a set of optical transceivers 550-1 - 550-N (collectively, optical transceivers 550), a wideband ASE source 560, and a power profile 570. The optical transceivers 550 receive optical signals received by the terminal 500 over the input optical fiber 510-I (e.g., received over input optical fiber 510-I, amplified by optical amplifier 520-I, and demultiplexed by the flex-grid mux/demux block 540 and provided to the relevant optical transceivers 550) and send optical signals sent by the terminal 500 over the output optical fiber 510-0 (e.g., provided by the optical transceivers 550 to the flex-grid mux/demux block 540, multiplexed by the flex-grid mux/demux block 540, amplified by the optical amplifier 520-O, and send over the output optical fiber 510-0). The OCM 530 monitors the output optical signals of the optical transceivers 550 at the optical amplifier 520-O. The wide-band ASE source 560 (or other suitable type of source) is configured to be dynamically shaped/filtered to load the optical channels with white noise loading signals in order to get a fully loaded spectrum before setting the output power of the output optical signals of the optical transceivers 550 based on the combination of the payload rate and baud rate determined to optimize data rate capacity for the optical channels. It will be appreciated that the optical channels may be loaded within the defined bandwidth in various ways (e.g., starting from the center, left side, or right side of the optical bandwidth). The optical transceivers 550 may be reconfigured with combinations of payload rate and baud rate determined to optimize the data rate capacity for the optical channels supported by the optical transceivers, in which case the output power of the optical transceivers 550 may be computed from the power profile 570 (e.g., an ASE power profile or any other suitable type of power profile) within the same bandwidth. It will be appreciated that the terminal 500 may be configured in various other ways while still optimizing data rate capacity for optical channels of the terminal 500.

It will be appreciated that, although primarily presented within the context of example embodiments in which the optical transmission system is based on OSNR, in at least some example embodiments the optical transmission system may be an open system in which one or more other types of SNR (e.g., GSNR, ESNR, or the like, as well as various combinations thereof) may be considered instead of OSNR.

It will be appreciated that, although primarily presented with respect to example embodiments in which payload rate and baud rate are evaluated in order to support tuning of optical transceivers for data rate capacity in a manner that optimizes spectral efficiency, in at least some example embodiments one or more other parameters (e.g., FEC rate or the like) also or alternatively may be evaluated in order to support tuning of optical transceivers for data rate capacity in a manner that optimizes spectral efficiency.

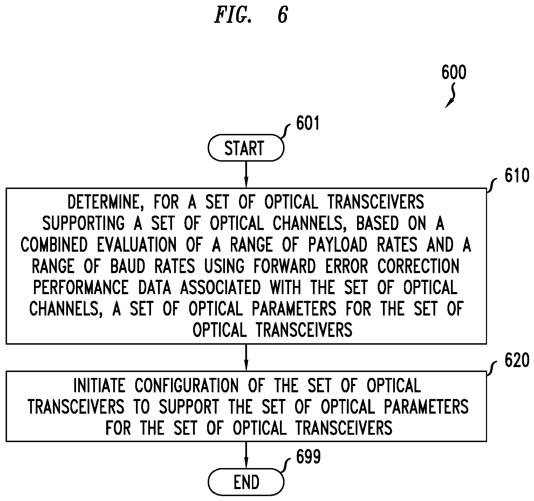

FIG. 6 depicts an example embodiment of method configured to support tuning of optical transceivers for data rate capacity. It will be appreciated that, although primarily presented as being performed serially, at least a portion of the functions of method 600 of FIG. 6 may be performed contemporaneously or in a different order than as presented in FIG. 6. At block 601, the method 600 begins. At block 610, determine, for a set of optical transceivers supporting a set of optical channels, based on a combined evaluation of a range of payload rates and a range of baud rates using forward error correction performance data associated with the set of optical channels, a set of optical parameters for the set of optical transceivers. At block 620, initiate configuration of the set of optical transceivers to support the set of optical parameters for the set of optical transceivers. At block 699, the method 600 ends.

Various example embodiments for supporting tuning of optical transceivers may provide various advantages or potential advantages. For example, various example embodiments for supporting tuning of optical transceivers may be configured to support tuning of optical transceivers in a manner tending to optimize spectral efficiency. For example, various example embodiments for supporting tuning of optical transceivers may be configured to support autonomous tuning of optical transceivers (e.g., a group of transponders, local and remote, is tuned at the best spectrum efficiency considering the Q factor margin given by the operator, transmission parameters (e.g., payload rate, baud rate, bit/symbol, or the like) and output power of transponders may be automatically tuned, or the like, as well as various combinations thereof) without requiring use of a network manager (although it while be appreciated that a network manager also or alternatively may be used). For example, various example embodiments for supporting tuning of optical transceivers may be configured to support self-assessed tuning of optical transceivers (e.g., quality of transmission based on local and remote FEC performance). For example, various example embodiments for supporting tuning of optical transceivers may be configured to support secure tuning of optical transceivers (e.g., the quality of transmission of neighbors may be monitored in order to make sure that spectrum efficiency of new channels is not optimized against the degradation of channels already in service, sequential light in and slow increase of output power may be used to prevent transients on neighbors, or the like, as well as various combinations thereof). For example, various example embodiments for supporting tuning of optical transceivers may be configured to support tuning of optical transceivers in a manner that is compatible with end-to-end systems and open systems. For example, various example embodiments for supporting tuning of optical transceivers may be configured to support tuning of optical transceivers within the context of various use cases, such as finding the maximum capacity for n channels within a bandwidth (e.g., within a full bandwidth or within a defined spectrum bandwidth), finding a new maximum capacity for n channels within a defined spectrum bandwidth under various conditions (e.g., after changing the Q factor margin, after the context has changed (e.g., after a degradation), or the like, as well as various combinations thereof. For example, various example embodiments for supporting tuning of optical transceivers may be configured to support tuning of optical transceivers supporting various levels of granularity, e.g., optical transceivers may become more tunable as the optical transceivers may be equipped with tunable filters which allow optical channels to be brought closer in the optical spectrum bandwidth (e.g., baud rates are expected to reach several tenths of GBaud with almost continuous granularity and payload rates from hundreds to several hundreds of GB/s will get smaller granularities from 100Gb/s to 50 Gb/s to 25Gb/s, taking advantage of incoming flex Ethernet on the client side). For example, various example embodiments for supporting tuning of optical transceivers may be configured to efficiently and reliably evaluate large numbers of combinations of parameters, to find the best spectrum efficiency (highest capacity within the minimum bandwidth), that result from the cross-talk produced by the great proximity of optical channels and the increasing tunability of optical transceivers. For example, various example embodiments for supporting tuning of optical transceivers may be configured to support tuning of optical transceivers based on techniques to explore the space of possible optical transceiver setting combinations with as few steps as possible to reduce the convergence time. For example, various example embodiments for supporting tuning of optical transceivers may be configured to support tuning of optical transceivers based on a trial-based search algorithm in which each step of the trial is assessed relying on FEC-performance data received from each corresponding remote transceiver of the defined group and the neighbors. For example, various example embodiments for supporting tuning of optical transceivers may be configured to support tuning of optical transceivers based on FEC performance data where the FEC performance data can be exchanged by each pair of optical transceivers using a dedicated field in the overhead of the transmitted data frames. For example, various example embodiments for supporting tuning of optical transceivers may be configured to support tuning of optical transceivers based on setting of the optical power of the output signal of each transponder where the output power is defined from the optical power of the ASE noise obtained after OSNR equalization of a full spectrum ASE noise pattern between line terminals. For example, various example embodiments for supporting tuning of optical transceivers may be configured to support tuning of optical transceivers based on the optical power of the output signal being adjusted step by step with an OCM, sequentially on each optical transceiver to prevent from impacts on the transmission of the neighbor channels using the same fiber. For example, various example embodiments for supporting tuning of optical transceivers may be configured to support tuning of optical transceivers based on synchronization of each stage with the group of remote transponders using a dedicated field in the overhead of the transmitted data frames, thereby avoiding the need of an external data control network. For example, various example embodiments for supporting tuning of optical transceivers may be configured to support tuning of optical transceivers based on a model that loosely estimates the subspace of optical transceiver setting combinations theoretically working for the measured GSNR, ESNR, or the like. Various example embodiments for supporting tuning of optical transceivers may provide various other advantages or potential advantages.

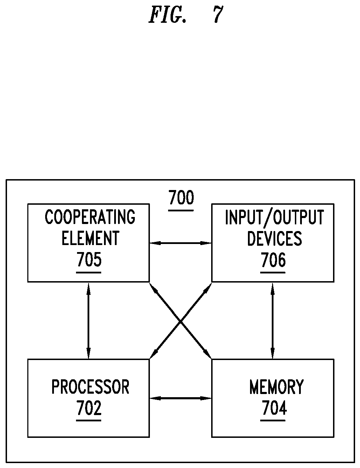

FIG. 7 depicts an example embodiment of a computer suitable for use in performing various functions presented herein.

The computer 700 includes a processor 702 (e.g., a central processing unit (CPU), a processor, a processor having a set of processor cores, a processor core of a processor, or the like) and a memory 704 (e.g., a random access memory, a read only memory, or the like). The processor 702 and the memory 704 may be communicatively connected. In at least some example embodiments, the computer 700 may include at least one processor and at least one memory including computer program code, wherein the set of instructions computer program code is configured to, when executed by the at least one processor, cause the computer to perform various functions presented herein.

The computer 700 also may include a cooperating element 705. The cooperating element 705 may be a hardware device. The cooperating element 705 may be a process that can be loaded into the memory 704 and executed by the processor 702 to implement various functions presented herein (in which case, for example, the cooperating element 705 (including associated data structures) can be stored on a non-transitory computer-readable storage medium, such as a storage device or other suitable type of storage element (e.g., a magnetic drive, an optical drive, or the like)).

The computer 700 also may include one or more input/output devices 706. The input/output devices 706 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 700 may represent a general architecture and functionality suitable for implementing functional elements described herein, portions of functional elements described herein, or the like, as well as various combinations thereof. For example, computer 700 may provide a general architecture and functionality that is suitable for implementing one or more elements presented herein, such as a terminal including one or more optical transceivers, a tuning controller configured to support tuning of one or more optical transceivers, one or more optical transceivers, a network controller, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

## Claims

1. An apparatus (700), comprising:
at least one processor (702) ; and
at least one memory (704) including computer program code;
wherein the at least one memory (704) and the computer program code are configured to, with the at least one processor (702), cause the apparatus (700) at least to:
determine, for a set of optical transceivers (120) supporting a set of optical channels (110), based on a combined evaluation of a range of payload rates and a range of baud rates using forward error correction performance data associated with the set of optical channels (110), a set of optical parameters for the set of optical transceivers (120) **characterized in that** the range of baud rates is defined based on a minimum baud rate value and a maximum baud rate value, the minimum baud rate value being based on a transceiver minimum baud rate, the maximum baud rate value being based on a maximum channel width of the set of optical channels and an occupancy ratio; and
initiate configuration of the set of optical transceivers (120) to support the set of optical parameters for the set of optical transceivers (120).

2. The apparatus (700) according to claim 1, wherein the set of optical parameters for the set of optical transceivers (120) is configured to optimize a spectral efficiency for the set of optical channels (110).

3. The apparatus (700) according to claim 2, wherein the spectral efficiency for the set of optical channels (110) is based on a payload rate for the set of optical channels and a channel width for the set of optical channels.

4. The apparatus (700) according to any of claims 1 to 3, wherein at least one of the range of payload rates and the range of baud rates is reduced based on at least one of a generalized signal to noise ratio or a signal to noise ratio due to end-to-end optical transmission.

5. The apparatus according to any of claims 1 to 4, wherein the combined evaluation of the range of payload rates and the range of baud rates is performed by stepping through at least a portion of the range of payload rates using a plurality of payload rate steps and stepping through at least a portion of the range of baud rates using a plurality of baud rate steps.

6. The apparatus (700) according to claim 5, wherein at least one of each of the optical channels (110) is configured at the same payload rate at each of the plurality of payload rate steps or each of the optical channels (110) is configured at the same baud rate at each of the plurality of baud rate steps.

7. The apparatus (700) according to claim 5, wherein at least one stepping through at least a portion of the range of payload rates is performed at a constant baud rate or stepping through at least a portion of the range of baud rates is performed at a constant payload rate.

8. The apparatus (700) according to claim 7, wherein at least one of the baud rate steps or the payload rate steps are defined based on at least one of a fixed minimum value, a fixed value determined based on an input value supported by the optical transceivers in the set of optical transceivers (120), or a granularity supported by the optical transceivers in the set of optical transceivers (120).

9. The apparatus (700) according to any of claims 1 to 8, wherein, for at least one of the optical channels, the forward error correction performance data is received in a dedicated field in an overhead of a data frame received by a local optical transceiver of the respective optical transceiver from a remote transceiver of the respective optical transceiver.

10. The apparatus (700) according to any of claims 1 to 9, wherein, to determine the set of optical parameters for the set of optical transceivers, the at least one memory (704) and the computer program code are configured to, with the at least one processor (702), cause the apparatus (700) at least to:
Split the set of optical channels (110) into a plurality of subsets of optical channels; and
evaluate the subsets of optical channels sequentially, based on the forward error correction performance data, to optimize respective spectral efficiencies of the subsets of optical channels.

11. The apparatus (700) according to any of claims 1 to 10, wherein, to initiate configuration of the set of optical transceivers (120) to support the set of optical parameters for the set of optical transceivers, the at least one memory and the computer program code are configured to, with the at least one processor, cause the apparatus (700) at least to:
send, toward the optical transceivers in set of optical transceivers, a set of in-band configuration commands for configuring the set of optical transceivers to support the set of optical parameters for the set of optical transceivers.

12. The apparatus (700) according to any of claims 1 to 11, wherein each of the optical transceivers (120) has a respective output power associated therewith, wherein the respective output powers of the optical transceivers are defined based on an optical power of an amplified spontaneous emission noise obtained after optical signal to noise ratio equalization of a full spectrum amplified spontaneous emission noise pattern between line terminals.

13. The apparatus (700) according to any of claims 1 to 12, wherein the apparatus is configured to reduce a convergence time to determine the set of optical parameters for the set of optical transceivers using the combined evaluation of the range of payload rates and the range of baud rates.

14. The apparatus according to claim 1, further comprising the set of optical transceivers (120) configured to support the set of respective optical channels (110; and a controller comprising the at least one processor (702) and the at least one memory (704) including the computer program code.

## Patentansprüche

1. Vorrichtung (700), umfassend:
mindestens einen Prozessor (702); und
mindestens einen Speicher (704), der Computerprogrammcode umfasst;
wobei der mindestens eine Speicher (704) und der Computerprogrammcode dazu ausgestaltet sind, mit dem mindestens einen Prozessor (702) zu bewirken, dass die Vorrichtung (700) mindestens Folgendes durchführt:
Bestimmen, für eine Menge optischer Transceiver (120), die eine Menge optischer Kanäle (110) unterstützen, basierend auf einer kombinierten Bewertung eines Bereichs von Nutzdatenraten und eines Bereichs von Baudraten unter Verwendung von Vorwärtsfehlerkorrektur-Leistungsdaten, die der Menge optischer Kanäle (110) zugehörig sind, einer Menge optischer Parameter für die Menge optischer Transceiver (120), **dadurch gekennzeichnet, dass**
der Bereich von Baudraten basierend auf einem Mindestbaudratenwert und einem Höchstbaudratenwert definiert ist, wobei der Mindestbaudratenwert auf einer Transceiver-Mindestbaudrate basiert, wobei der Höchstbaudratenwert auf einer Höchstkanalbreite der Menge optischer Kanäle und einem Belegungsgrad basiert; und
Einleiten der Konfiguration der Menge optischer Transceiver (120) zum Unterstützen der Menge optischer Parameter für die Menge optischer Transceiver (120).

2. Vorrichtung (700) nach Anspruch 1, wobei die Menge optischer Parameter für die Menge optischer Transceiver (120) dazu ausgestaltet ist, eine spektrale Effizienz für die Menge optischer Kanäle (110) zu optimieren.

3. Vorrichtung (700) nach Anspruch 2, wobei die spektrale Effizienz für die Menge optischer Kanäle (110) auf einer Nutzdatenrate für die Menge optischer Kanäle und einer Kanalbreite für die Menge optischer Kanäle basiert.

4. Vorrichtung (700) nach einem der Ansprüche 1 bis 3, wobei mindestens eines von dem Bereich von Nutzdatenraten und dem Bereich von Baudraten basierend auf mindestens einem von einem verallgemeinerten Signal-Rausch-Verhältnis oder einem Signal-Rausch-Verhältnis aufgrund von optischer End-zu-End-Übertragung vermindert ist.

5. Vorrichtung nach einem der Ansprüche 1 bis 4, wobei die kombinierte Bewertung des Bereichs von Nutzdatenraten und des Bereichs von Baudraten durch Durchschreiten mindestens eines Abschnitts des Bereichs von Nutzdatenraten unter Verwendung einer Vielzahl von Nutzdatenratenschritten und Durchschreiten mindestens eines Abschnitts des Bereichs von Baudraten unter Verwendung einer Vielzahl von Baudratenschritten durchgeführt wird.

6. Vorrichtung (700) nach Anspruch 5, wobei mindestens einer von jedem der optischen Kanäle (110) bei der gleichen Nutzdatenrate an jedem der Vielzahl von Nutzdatenratenschritten konfiguriert wird oder jeder der optischen Kanäle (110) bei der gleichen Baudrate bei jedem der Vielzahl von Baudratenschritten konfiguriert wird.

7. Vorrichtung (700) nach Anspruch 5, wobei mindestens ein Durchschreiten mindestens eines Abschnitts des Bereichs von Nutzdatenraten bei einer konstanten Baudrate durchgeführt wird oder das Durchschreiten mindestens eines Abschnitts des Bereichs von Baudraten bei einer konstanten Nutzdatenrate durchgeführt wird.

8. Vorrichtung (700) nach Anspruch 7, wobei mindestens eines von den Baudratenschritten oder den Nutzdatenratenschritten basierend auf mindestens einem von einem festen Mindestwert, einem festen Wert, der basierend auf einem Eingangswert bestimmt wird, der von den optischen Transceivern in der Menge optischer Transceiver (120) unterstützt wird, oder einer Granularität definiert werden, die von den optischen Transceivern in der Menge optischer Transceiver (120) unterstützt wird.

9. Vorrichtung (700) nach einem der Ansprüche 1 bis 8, wobei für mindestens einen der optischen Kanäle die Vorwärtsfehlerkorrektur-Leistungsdaten in einem dedizierten Feld in einem Overhead eines Datenrahmens empfangen werden, der durch einen lokalen optischen Transceiver des entsprechenden optischen Transceivers von einem entfernten Transceiver des entsprechenden optischen Transceivers empfangen wird.

10. Vorrichtung (700) nach einem der Ansprüche 1 bis 9, wobei zum Bestimmen der Menge optischer Parameter für die Menge optischer Transceiver der mindestens eine Speicher (704) und der Computerprogrammcode dazu ausgestaltet sind, mit dem mindestens einen Prozessor (702) zu bewirken, dass die Vorrichtung (700) mindestens Folgendes durchführt:
Teilen der Menge optischer Kanäle (110) in eine Vielzahl von Teilmengen optischer Kanäle; und
aufeinanderfolgendes Bewerten der Teilmengen optischer Kanäle basierend auf den Vorwärtsfehlerkorrektur-Leistungsdaten, um entsprechende spektrale Effizienzen der Teilmengen optischer Kanäle zu optimieren.

11. Vorrichtung (700) nach einem der Ansprüche 1 bis 10, wobei zum Einleiten der Konfiguration der Menge optischer Transceiver (120) zum Unterstützen der Menge optischer Parameter für die Menge optischer Transceiver der mindestens eine Speicher und der Computerprogrammcode dazu ausgestaltet sind, mit dem mindestens einen Prozessor zu bewirken, dass die Vorrichtung (700) mindestens Folgendes durchführt:
Senden, in Richtung der optischen Transceiver in der Menge optischer Transceiver, einer Menge von Inband-Konfigurationsbefehlen zum Konfigurieren der Menge optischer Transceiver zum Unterstützen der Menge optischer Parameter für die Menge optischer Transceiver.

12. Vorrichtung (700) nach einem der Ansprüche 1 bis 11, wobei jeder der optischen Transceiver (120) eine entsprechende ihm zugehörige Ausgangsleistung aufweist, wobei die entsprechenden Ausgangsleistungen der optischen Transceiver basierend auf einer optischen Leistung eines verstärkten spontanen Emissionsrauschens bestimmt werden, das nach optischem Signal-Rausch-Verhältnisausgleich eines verstärkten spontanen Emissionsrauschmusters mit vollem Spektrum zwischen Leitungsanschlüssen erhalten wird.

13. Vorrichtung (700) nach einem der Ansprüche 1 bis 12, wobei die Vorrichtung dazu ausgestaltet ist, eine Konvergenzzeit zum Bestimmen der Menge optischer Parameter für die Menge optischer Transceiver unter Verwendung der kombinierten Bewertung des Bereichs von Nutzdatenraten und des Bereichs von Baudraten zu bestimmen.

14. Vorrichtung nach Anspruch 1, die ferner die Menge optischer Transceiver (120), die zum Unterstützen der Menge entsprechender optischer Kanäle (110) bestimmt sind; und eine Steuereinrichtung umfasst, die den mindestens einen Prozessor (702) und den mindestens einen Speicher (704) umfasst, der den Computerprogrammcode umfasst.

## Revendications

1. Appareil (700), comprenant :
au moins un processeur (702) ; et
au moins une mémoire (704) incluant un code de programme d'ordinateur ;
dans lequel l'au moins une mémoire (704) et le code de programme d'ordinateur sont configurés pour, avec l'au moins un processeur (702), amener l'appareil (700) au moins à :
déterminer, pour un ensemble d'émetteurs-récepteurs optiques (120) prenant en charge un ensemble de canaux optiques (110), sur la base d'une évaluation combinée d'une plage de débits de charge utile et d'une plage de débits en bauds à l'aide de données de performances de correction d'erreur directe associées à l'ensemble de canaux optiques (110), un ensemble de paramètres optiques pour l'ensemble d'émetteurs-récepteurs optiques (120), **caractérisé en ce que** la plage de débits en bauds est définie sur la base d'une valeur de débit en bauds minimale et d'une valeur de débit en bauds maximale, la valeur de débit en bauds minimale étant basée sur un débit en bauds minimal d'émetteur-récepteur, la valeur de débit en bauds maximale étant basée sur une largeur de canal maximale de l'ensemble de canaux optiques et un taux d'occupation ; et
initier une configuration de l'ensemble d'émetteurs-récepteurs optiques (120) pour prendre en charge l'ensemble de paramètres optiques pour l'ensemble d'émetteurs-récepteurs optiques (120).

2. Appareil (700) selon la revendication 1, dans lequel l'ensemble de paramètres optiques pour l'ensemble d'émetteurs-récepteurs optiques (120) est configuré pour optimiser une efficacité spectrale pour l'ensemble de canaux optiques (110).

3. Appareil (700) selon la revendication 2, dans lequel l'efficacité spectrale pour l'ensemble de canaux optiques (110) est basée sur un débit de charge utile pour l'ensemble de canaux optiques et une largeur de canal pour l'ensemble de canaux optiques.

4. Appareil (700) selon l'une quelconque des revendications 1 à 3, dans lequel au moins l'une parmi la plage de débits de charge utile et la plage de débits en bauds est réduite sur la base d'au moins l'un parmi un rapport signal sur bruit généralisé ou un rapport signal sur bruit dû à une transmission optique de bout en bout.

5. Appareil selon l'une quelconque des revendications 1 à 4, dans lequel l'évaluation combinée de la plage de débits de charge utile et de la plage de débits en bauds est réalisée en parcourant pas à pas au moins une partie de la plage de débits de charge utile à l'aide d'une pluralité de pas de débit de charge utile et en parcourant pas à pas au moins une partie de la plage de débits en bauds à l'aide d'une pluralité de pas de débit en bauds.

6. Appareil (700) selon la revendication 5, dans lequel au moins l'un parmi chacun des canaux optiques (110) est configuré au même débit de charge utile à chacun de la pluralité de pas de débit de charge utile ou chacun des canaux optiques (110) est configuré au même débit en bauds à chacun de la pluralité de pas de débit en bauds.

7. Appareil (700) selon la revendication 5, dans lequel au moins l'un parmi parcourir pas à pas au moins une partie de la plage de débits de charge utile est réalisé à un débit en bauds constant ou parcourir pas à pas au moins une partie de la plage de débits en bauds est réalisé à un débit de charge utile constant.

8. Appareil (700) selon la revendication 7, dans lequel au moins l'un parmi les pas de débit en bauds ou les pas de débit de charge utile sont définis sur la base d'au moins l'une parmi une valeur minimale fixe, une valeur fixe déterminée sur la base d'une valeur d'entrée prise en charge par les émetteurs-récepteurs optiques dans l'ensemble d'émetteurs-récepteurs optiques (120), ou une granularité prise en charge par les émetteurs-récepteurs optiques dans l'ensemble d'émetteurs-récepteurs optiques (120).

9. Appareil (700) selon l'une quelconque des revendications 1 à 8, dans lequel, pour au moins l'un des canaux optiques, les données de performances de correction d'erreur directe sont reçues dans un champ dédié dans un surcroît d'une trame de données reçue par un émetteur-récepteur optique local de l'émetteur-récepteur optique respectif en provenance d'un émetteur-récepteur distant de l'émetteur-récepteur optique respectif.

10. Appareil (700) selon l'une quelconque des revendications 1 à 9, dans lequel, pour déterminer l'ensemble de paramètres optiques pour l'ensemble d'émetteurs-récepteurs optiques, l'au moins une mémoire (704) et le code de programme d'ordinateur sont configurés pour, avec l'au moins un processeur (702), amener l'appareil (700) au moins à :
diviser l'ensemble de canaux optiques (110) en une pluralité de sous-ensembles de canaux optiques ; et
évaluer les sous-ensembles de canaux optiques en séquence, sur la base des données de performances de correction d'erreur directe, pour optimiser des efficacités spectrales respectives des sous-ensembles de canaux optiques.

11. Appareil (700) selon l'une quelconque des revendications 1 à 10, dans lequel, pour initier une configuration de l'ensemble d'émetteurs-récepteurs optiques (120) pour prendre en charge l'ensemble de paramètres optiques pour l'ensemble d'émetteurs-récepteurs optiques, l'au moins une mémoire et le code de programme d'ordinateur sont configurés pour, avec l'au moins un processeur, amener l'appareil (700) au moins à :
envoyer, vers les émetteurs-récepteurs optiques dans un ensemble d'émetteurs-récepteurs optiques, un ensemble de consignes de configuration intra-bande pour la configuration de l'ensemble d'émetteurs-récepteurs optiques pour prendre en charge l'ensemble de paramètres optiques pour l'ensemble d'émetteurs-récepteurs optiques.

12. Appareil (700) selon l'une quelconque des revendications 1 à 11, dans lequel chacun des émetteurs-récepteurs optiques (120) possède une puissance de sortie respective associée à celui-ci, dans lequel les puissances de sortie respectives des émetteurs-récepteurs optiques sont définies sur la base d'une puissance optique d'un bruit d'émission spontanée amplifié obtenu après égalisation de rapport signal sur bruit optique d'un profil de bruit d'émission spontanée amplifié à spectre complet entre des terminaisons de ligne.

13. Appareil (700) selon l'une quelconque des revendications 1 à 12, dans lequel l'appareil est configuré pour réduire un temps de convergence pour déterminer l'ensemble de paramètres optiques pour l'ensemble d'émetteurs-récepteurs optiques à l'aide de l'évaluation combinée de la plage de débits de charge utile et de la plage de débits en bauds.

14. Appareil selon la revendication 1, comprenant en outre l'ensemble d'émetteurs-récepteurs optiques (120) configuré pour prendre en charge l'ensemble de canaux optiques (110) respectifs ; et un dispositif de commande comprenant l'au moins un processeur (702) et l'au moins une mémoire (704) incluant le code de programme d'ordinateur.
